# FASCICULE DE BREVET EUROPEEN

(11) **EP 2 704 241 B1**
(45) Date de publication et mention de la délivrance du brevet: **08.07.2015**
(21) Numéro de dépôt: 13182503.6
(22) Date de dépôt: 30.08.2013
(51) Int. Cl.: H01M 8/02, H01M 8/10

(54) **Procédé de fabrication d'une pile à combustible incluant un assemblage électrode/membrane**
Verfahren zur Herstellung einer Brennstoffzelle mit Elektroden/Membran-Einheit
Method of manufacturing a fuel cell comprising an assembly electrode/membrane

(30) Priorité: 03.09.2012 FR 1258197
(43) Date de publication de la demande: 05.03.2014
(73) Titulaire: Commissariat à l'Énergie Atomique et aux Énergies Alternatives, 75015 Paris (FR)
(72) Inventeur: Vincent, Rémi, 38000 Grenoble (FR); Barthe, Benoît, 73310 Chindrieux (FR); Tremblay, Denis, 38340 Pommiers-la-Placette (FR)
(74) Mandataire: Guérin, Jean-Philippe

(56) Documents cités:
- EP-A1- 2 131 429
- JP-A- 2009 193 700
- JP-A- 2009 245 797
- JP-A- 2010 198 903
- US-A1- 2008 105 354
- US-A1- 2012 141 921

## Description

L'invention concerne les piles à combustible à membranes échangeuses de protons (dites PEM pour Proton Exchange Membrane en langue anglaise), et en particulier les procédés de fabrication de piles à combustibles.

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Du dihydrogène est utilisé comme carburant de la pile à combustible. Le dihydrogène est oxydé et ionisé sur une électrode de la pile et du dioxygène de l'air est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique.

La pile à combustible peut comprendre plusieurs plaques d'écoulement, par exemple en métal, empilées les unes sur les autres. La membrane est disposée entre deux plaques d'écoulement. Les plaques d'écoulement peuvent comprendre des canaux et orifices pour guider les réactifs et les produits vers/depuis la membrane. Les plaques sont également électriquement conductrices pour former des collecteurs des électrons générés au niveau de l'anode.

Des couches de diffusion gazeuse (pour Gaz Diffusion Layer en langue anglaise) sont interposées entre les électrodes et les plaques d'écoulement et sont en contact avec les plaques d'écoulement.

Les procédés d'assemblage de la pile à combustible, et en particulier les procédés de fabrication de l'AME, ont une importance déterminante sur les performances de la pile à combustible et sur sa durée de vie.

Un procédé connu de fabrication de l'assemblage membrane/électrodes est actuellement favorisé pour obtenir un compromis optimal entre les performances de l'AME et sa durée de vie. Ce procédé comprend une étape préalable d'impression d'une couche d'encre électrocatalytique sur un support lisse et hydrophobe, insensible aux solvants présents dans l'encre. Le support d'impression présente notamment une énergie de surface très faible et une rugosité très faible. Après formation d'une électrode par séchage de l'encre électrocatalytique, l'électrode est assemblée à la membrane par un pressage à chaud. Du fait de la faible adhésion de l'électrode sur le support d'impression, ce pressage à chaud peut être réalisé avec une température et une pression réduites. La dégradation de la membrane lors de l'étape de pressage à chaud est ainsi réduite. En outre, l'électrode formée par impression sur un support lisse présente une épaisseur et une composition homogènes, ce qui limite également l'altération de la membrane lors du pressage à chaud. En outre, l'électrode étant assemblée sur la membrane après séchage, la membrane n'est pas placée en contact avec les solvants de l'encre et ne subit pas d'altération correspondante.

Le document US2008/0105354 décrit un tel procédé d'assemblage membrane/électrodes pour une pile à combustible. L'assemblage membrane/électrodes formé comporte des renforts. Chaque renfort entoure les électrodes. Les renforts sont formés à partir de films polymères et renforcent l'assemblage membrane/électrodes au niveau des arrivées de gaz et de liquide de refroidissement. Les renforts facilitent la manipulation de l'assemblage membrane/électrodes pour éviter sa détérioration. Les renforts limitent également les variations dimensionnelles de la membrane en fonction de la température et de l'humidité. En pratique, les renforts se superposent à la périphérie des électrodes, afin de limiter le phénomène de perméation de gaz à l'origine d'une détérioration de l'assemblage membrane/électrodes.

Selon ce procédé, on réalise un renfort en formant une ouverture dans la partie médiane d'un film polymère. Le renfort comporte un adhésif sensible à la pression sur une face. On récupère un assemblage membrane/électrodes et l'on vient placer l'ouverture du renfort à l'aplomb d'une électrode. Le renfort recouvre la périphérie de cette électrode. Un pressage est ensuite réalisé pour solidariser le renfort à la membrane et à la bordure de l'électrode, par l'intermédiaire de l'adhésif. Des découpes sont ensuite réalisées dans le renfort pour former les arrivées de gaz et de liquide.

Des couches de diffusion gazeuse sont ensuite placées en contact avec la partie découverte des électrodes. Une opération de pressage à chaud est fréquemment réalisée pour favoriser le contact entre une couche de diffusion gazeuse et son électrode. La périphérie de chaque couche de diffusion gazeuse recouvre au moins une partie d'un renfort respectif, afin de limiter le cisaillement direct de la membrane. Localement, la superposition d'une électrode, d'un renfort et de la couche de diffusion gazeuse induit une surépaisseur. Lors d'une étape de pressage à chaud, cette zone subit une pression locale supérieure, potentiellement à l'origine de détériorations, en particulier sur la membrane, à l'origine d'une baisse de durée de vie de la pile à combustible. La non homogénéité de la pression lors du pressage à chaud peut en outre être à l'origine de lacunes entre le renfort, la couche de diffusion gazeuse et l'électrode, à l'origine de dégradations de performances de la pile à combustible. le document EP 2131429 décrit une pile à combustible comprenant un renfort et une couche de diffusion comportant un évidement obtenu par moulage à sa périphérie et recouvrant la bordure interne du renfort. L'augmentation de la puissance d'une pile à combustible est généralement effectuée lors de son dimensionnement, soit en augmentant le nombre de cellules électrochimiques empilées, soit en accroissant la surface des assemblages membrane/électrodes et des plaques bipolaires. Ces mesures de dimensionnement accroissent cependant dans la même proportion le poids et l'encombrement de la pile à combustible, ainsi que le volume et le coût de la couche de diffusion gazeuse. Dans de nombreuses applications (comme l'automobile ou l'aéronautique), l'encombrement et le poids d'une pile à combustible doivent être fortement limités.

L'invention vise à résoudre un ou plusieurs de ces inconvénients. L'invention porte ainsi sur un procédé de fabrication d'une pile à combustible tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe schématique d'un exemple de pile à combustible ;
- la figure 2 est une vue en coupe de la périphérie d'un assemblage membrane/électrodes dépourvu de couche de diffusion gazeuse ;
- la figure 3 est une vue en coupe de la périphérie d'une couche de diffusion gazeuse pouvant être intégrée dans une pile à combustible ;
- les figures 4 à 10 illustrent différentes étapes d'un exemple de procédé de fabrication d'une pile à combustible selon l'invention ;
- la figure 11 est une vue en coupe schématique agrandie d'une variante de pile à combustible au niveau d'un assemblage membrane/électrodes ;
- la figure 12 est une vue en coupe schématique agrandie de l'interface entre les cellules électrochimiques d'une pile à combustible selon un autre axe ;
- la figure 13 est une vue en coupe d'une couche de diffusion gazeuse durant un exemple de procédé par voie humide de formation d'un autre type relief par filigrane ;
- la figure 14 est une vue de dessus d'un dispositif pour la mise en oeuvre d'un procédé par voie humide de formation d'un autre type de relief par filigrane.

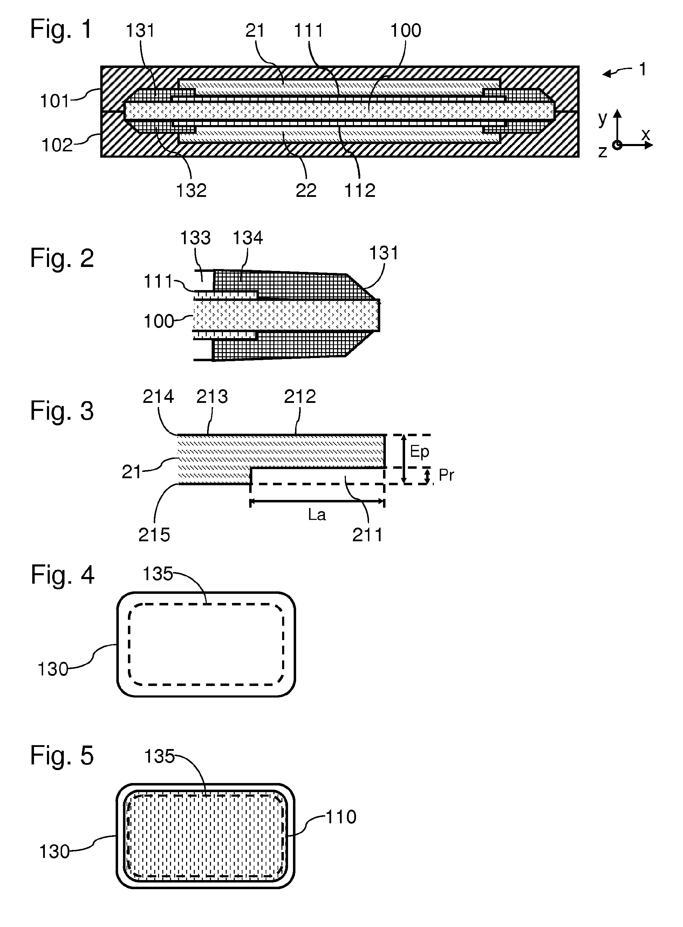

La figure 1 est une vue en coupe schématique d'un exemple de pile à combustible 1, incluant un assemblage membrane/électrodes fabriqué selon un exemple de procédé selon l'invention. La pile à combustible 1 est du type à membrane échangeuse de protons ou membrane à électrolyte polymère. Bien que non illustré, la pile à combustible 1 peut comprendre plusieurs cellules électrochimiques superposées. La pile à combustible 1 comprend une source de carburant alimentant en dihydrogène une entrée de chaque cellule. La pile à combustible 1 comprend également une source d'air alimentant une entrée de chaque cellule en air, contenant de l'oxygène utilisé comme oxydant. Chaque cellule comprend également des canaux d'échappement. Chaque cellule peut également présenter un circuit de refroidissement de façon connue en soi.

Chaque cellule comprend un assemblage membrane/électrodes ou AME. Chaque assemblage membrane/électrodes comprend une couche d'électrolyte formée par exemple d'une membrane polymère 100.

L'assemblage membrane/électrodes comprend également une cathode 111 et une anode 112 placées de part et d'autre de la membrane 100. La cathode 111 et l'anode 112 sont avantageusement fixées sur cette membrane 100, par tout moyen approprié (par exemple par pressage à chaud).

La couche d'électrolyte forme une membrane semi-perméable 100 permettant une conduction protonique tout en étant imperméable aux gaz présents dans la cellule. La membrane 100 empêche également un passage des électrons entre l'anode 112 et la cathode 111.

La pile à combustible 1 comporte en outre des renforts 131 et 132 disposés à la périphérie respectivement de la cathode 111 et de l'anode 112. Les renforts 131 et 132 se superposent à la périphérie des électrodes avec un débordement sur la membrane 100, afin de limiter le phénomène de perméation de gaz à l'origine d'une détérioration de l'assemblage membrane/électrodes. Les renforts 131 et 132 sont typiquement formés à partir de films polymères et renforcent l'assemblage membrane/électrodes au niveau des arrivées de gaz et de liquide de refroidissement. Les renforts 131 et 132 facilitent également la manipulation de l'assemblage membrane/électrodes pour éviter sa détérioration. Les renforts 131 et 132 limitent également les variations dimensionnelles de la membrane 100 en fonction de la température et de l'humidité.

Chaque cellule présente des plaques de guidage d'écoulement 101 et 102, disposées en vis-à-vis respectivement de la cathode 111 et de l'anode 112. Chaque cellule présente une couche de diffusion de gaz 21 disposée entre la cathode 111 et la plaque de guidage 101. Chaque cellule présente par ailleurs une couche de diffusion de gaz 22 disposée entre l'anode 112 et la plaque de guidage 102. Deux plaques de guidage de cellules adjacentes peuvent former une plaque bipolaire, de façon connue en soi. Les plaques de guidage peuvent être formées de feuilles métalliques comportant une surface en relief définissant des canaux d'écoulement.

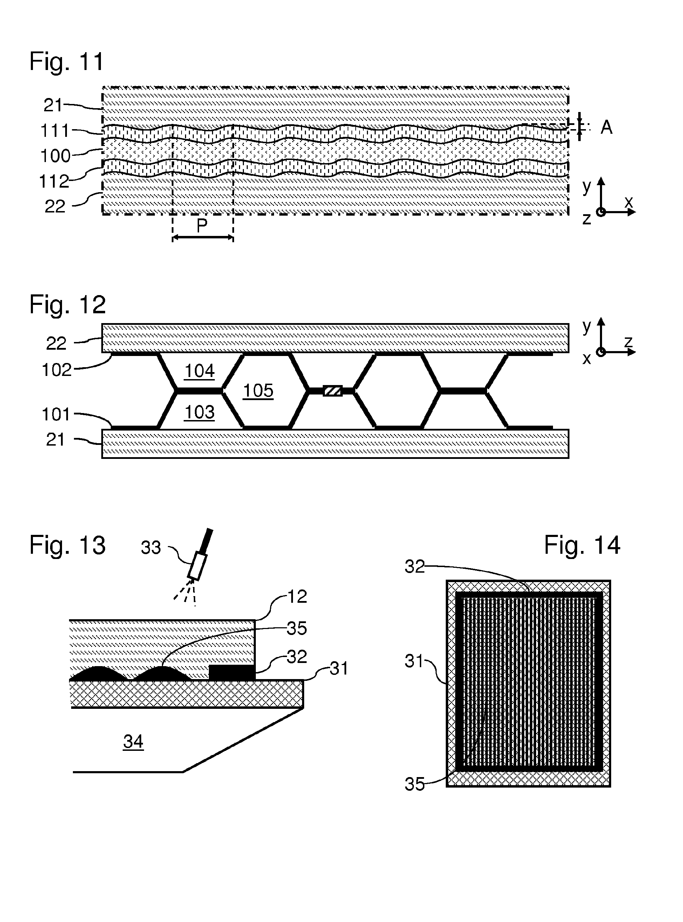

Les canaux d'écoulement 103 et 104 sont répartis selon la direction z, et s'étendent selon la direction x, comme illustré à la figure 12. Les cellules électrochimiques superposées sont comprimées de façon connue en soi, de façon à assurer l'étanchéité à la périphérie des cellules, et de façon à plaquer les couches de diffusion gazeuse contre leur électrode et leur plaque de guidage respective.

De façon connue en soi, durant le fonctionnement de la pile à combustible 1, de l'air s'écoule entre l'AME et la plaque de guidage 101, et du dihydrogène s'écoule entre l'AME et la plaque de guidage 102. Au niveau de l'anode 112, le dihydrogène est ionisé pour produire des protons qui traversent l'AME. Les électrons produits par cette réaction sont collectés par la plaque de guidage 101. Les électrons produits sont ensuite appliqués sur une charge électrique connectée à la pile à combustible 1 pour former un courant électrique. Au niveau de la cathode 111, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule de la pile à combustible génère usuellement une tension continue entre l'anode et la cathode de l'ordre de 1 V.

La figure 2 est une vue en coupe de la périphérie de l'assemblage membrane/électrodes de la pile à combustible de la figure 1. Pour des raisons de lisibilité, les couches de diffusion gazeuse ne sont pas illustrées sur cette vue.

Le renfort 131 sera détaillé par la suite, le renfort 132 pouvant présenter une structure sensiblement identique. Le renfort 131 comporte une bordure interne 134 qui recouvre la périphérie de la cathode 111. Le recouvrement de la périphérie de la cathode 111 par la bordure interne 134 s'étend avantageusement sur une largeur comprise entre 500 et 3000 µm. La bordure interne 134 est solidarisée à la cathode 111. Le renfort 131 s'étend au-delà de la périphérie de la cathode 111 et forme un débordement sur la membrane 100. Le renfort 131 est solidarisé à la membrane 100. La solidarisation du renfort 131 à la cathode 111 et à la membrane 100 peut être réalisée par tout moyen approprié, par exemple par pressage à chaud ou par impression de la cathode 111 sur le renfort 131. Le renfort 131 comporte une ouverture 133 dans sa partie médiane. L'ouverture 133 découvre ainsi la partie médiane de la cathode 111.

Les renforts 131, 132 et les électrodes 111, 112 présentent généralement des épaisseurs homogènes. Par conséquent, le recouvrement entre la bordure interne d'un renfort et la périphérie d'une électrode peut créer une légère surépaisseur locale. Cette surépaisseur peut correspondre sensiblement à l'épaisseur de l'électrode. Les électrodes 111 et 112 présentent généralement une épaisseur comprise entre 5 et 25µm. Les renforts 131 et 132 présentent généralement une épaisseur comprise entre 25 et 75µm.

La figure 3 est une vue en coupe agrandie de la périphérie d'un exemple de couche de diffusion gazeuse utilisable côté anode ou côté cathode d'une pile à combustible 1 selon l'invention.

La couche de diffusion gazeuse 21 illustrée comporte deux faces 214 et 215. La face 214 est destinée à venir en contact avec la plaque de guidage 101. La face 215 est destinée à venir en contact avec une électrode (la cathode 111 en l'occurrence), à travers l'ouverture 133 du renfort 131. La couche de diffusion gazeuse 21 comporte un évidement 211 à sa périphérie, l'évidement 211 étant ménagé dans la face 215. La partie médiane de la face 215 forme ainsi un renflement (par rapport à l'évidement 211) traversant l'ouverture 133 du renfort 131, afin de venir en contact avec la cathode 111.

L'évidement 211 est destiné à venir à l'aplomb de la bordure interne 134 du renfort 131. Ainsi, on crée une superposition entre la bordure interne 134, en limitant ou supprimant la surépaisseur formée localement par cette superposition. A cet effet, l'évidement 211 présente avantageusement une profondeur Pr comprise entre 0,8*Epr et 1,1 *Epr, avec Epr l'épaisseur du renfort 131 au niveau de sa bordure interne 134. La profondeur Pr est avantageusement comprise entre 25 et 75 µm. La couche de diffusion gazeuse 21 comporte avantageusement une épaisseur Ep comprise entre 200 et 400 µm au niveau de sa partie médiane. La largeur de l'évidement 211 est avantageusement comprise entre 500 et 3000µm. Le dimensionnement de l'évidement 211 est avangageusement réalisé de sorte que la bordure interne 134 ne s'étende pas jusqu'à la partie médiane de la face 215, ou de sorte que le renflement formé se loge à l'intérieur de l'ouverture 133.

La jonction entre l'évidement 211 et la partie médiane de la face 215 peut avantageusement présenter un chanfrein ou un rayon de raccordement.

Pour limiter les surpressions locales lors d'une éventuelle étape de pressage à chaud, la couche de diffusion gazeuse 211 présente avantageusement une face 214 dans laquelle une portion 212 est dans l'alignement d'une portion 213. La portion 212 correspond à la partie de la face 214 se trouvant à l'aplomb de l'évidement 211. La partie 213 correspond à la partie médiane de la face 214. Ainsi, le niveau de la face 214 est sensiblement homogène lors d'une étape de pressage à chaud ou lors de l'assemblage des plaques 101 et 102. Avantageusement, la face 214 est sensiblement plane. Avantageusement, la couche de diffusion gazeuse 211 comporte une composition sensiblement homogène sur toute sa surface.

Les figures 4 à 10 illustrent différentes étapes de la fabrication d'une pile à combustible 1 selon un exemple de procédé de l'invention. Le procédé décrit en référence aux figures 4 à 10 pourra être mis en oeuvre côté cathode 111 et/ou côté anode 112.

La figure 4 est une vue de dessus d'un support 130 fourni. Le support 130 est avantageusement plan. Un contour prédécoupé 135 peut être réalisé dans le support 130. Le contour prédécoupé 135 sépare ainsi le support 130 entre une partie périphérique et une partie médiane.

La figure 5 est une vue de dessus du support 130 après le dépôt d'une encre électrocatalytique en phase liquide, destinée à former une électrode 110 après séchage. L'électrode 110 peut être solidifiée par tous moyens appropriés. L'électrode 110 formée s'étend au-delà du contour prédécoupé 135. On crée ainsi une superposition entre une bordure interne de la partie périphérique et la périphérie de l'électrode 110.

Le matériau électrocatalytique présente des propriétés catalytiques adaptées pour la réaction catalytique à réaliser. Le matériau électrocatalytique peut se présenter sous la forme de particules ou de nano particules incluant des atomes métalliques. Le matériau catalyseur peut notamment comprendre des oxydes métalliques. Le matériau électrocatalytique peut être un métal tel que le platine, l'or, l'argent, le cobalt, le ruthénium.

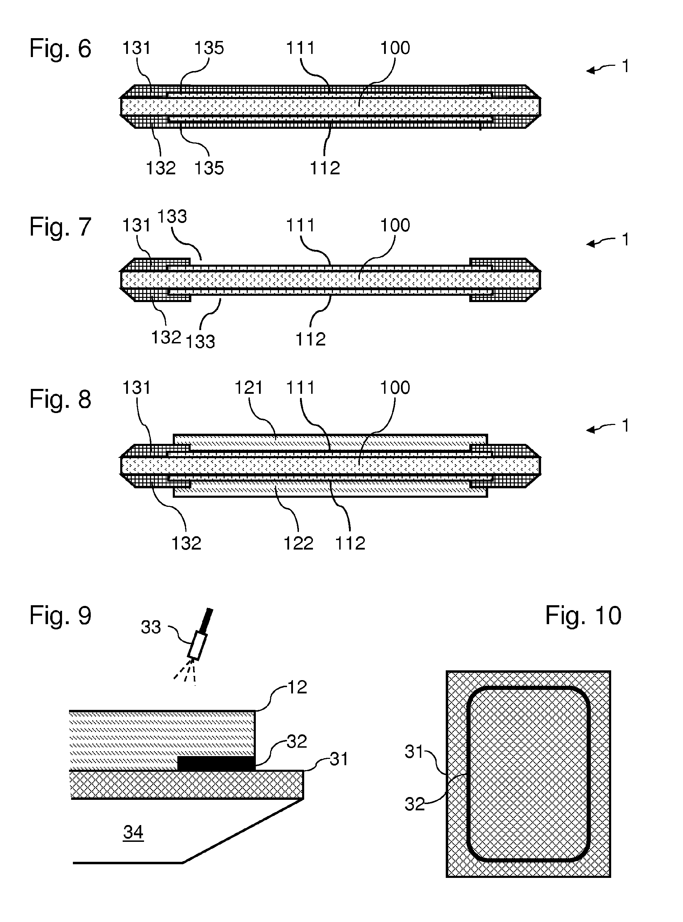

La figure 6 est une vue en coupe d'une cellule de pile à combustible 1 formée en utilisant un support (comme renfort 131) et une cathode 111, ainsi qu'un support (comme renfort 132) et une anode 112, obtenus selon les étapes illustrées aux figures 4 et 5. À cette étape du processus de fabrication, un assemblage membrane/électrodes est réalisé en solidarisant d'une part le support/renfort 131 et la cathode 111 sur une face de la membrane 100, et en solidarisant d'autre part le support/renfort 132 et l'anode 112 sur une autre face de la membrane 100. Un renfort et une électrode peuvent ainsi être solidarisés à la membrane 100 durant une même étape de pressage à chaud.

Pour favoriser l'adhésion d'une électrode 110 à la membrane 100 lors d'une étape de pressage à chaud, la membrane 100 et l'électrode 110 comportent avantageusement un même matériau polymère. Ce matériau polymère présente avantageusement une température de transition vitreuse inférieure à la température du pressage à chaud. Le matériau polymérisable utilisé pour former ce matériau polymère pourra être le ionomère commercialisé sous la référence commerciale Nafion DE2020.

Pour une adhésion par pressage à chaud, la température du pressage à chaud est avantageusement comprise entre 100 et 130°C, et de préférence comprise entre 110 et 125°C.

La figure 7 est une vue en coupe de la cellule de pile à combustible 1 après le retrait (découpe le long des contours 135) de la partie médiane des renforts 131 et 132 respectivement, de façon à ménager leur ouverture 133. Les ouvertures 133 découvrent respectivement la partie médiane de la cathode 111 et la partie médiane de l'anode 112. On peut ainsi former des renforts à partir de supports de dépôt d'une encre électrocatalytique.

Avantageusement, à l'issue de cette étape de retrait, les renforts 131 et 132 peuvent faire l'objet de découpes d'orifices traversants à leur périphérie, par exemple pour ménager des passages d'écoulement de gaz ou de liquide de refroidissement.

La figure 8 est une vue en coupe de la cellule de pile à combustible 1 après la mise en place de couches de diffusion gazeuse 21 et 22. La couche de diffusion gazeuse 21 est ainsi placée en contact avec la partie découverte de la cathode 111, à travers l'ouverture 133. La périphérie de la couche de diffusion gazeuse 21 recouvre la bordure interne 134 du renfort 131. La bordure interne 134 du renfort 131 vient donc se loger dans l'évidement 211 de la couche de diffusion gazeuse 21. La couche de diffusion gazeuse 22 est placée en contact avec la partie découverte de l'anode 112, à travers l'ouverture 133. La périphérie de la couche de diffusion gazeuse 22 recouvre la bordure interne 134 du renfort 132. La bordure interne 134 du renfort 132 vient donc se loger dans l'évidement 211 de la couche de diffusion gazeuse 22.

Pour obtenir la cellule de pile à combustible 1 illustrée à la figure 1, l'assemblage membrane/électrodes muni des couches de diffusion gazeuse 21 et 22 peut ensuite être inclus entre deux plaques métalliques de guidage d'écoulement 101 et 102.

Un évidement 211 peut être formé en utilisant des procédés connus de formation de filigranes dans des pâtes à papier. Une couche de diffusion gazeuse comportant un évidement 211 sous forme de filigrane peut notamment être réalisée par voie humide. La figure 9 est une vue en coupe schématique illustrant une étape d'un exemple de procédé de fabrication par voie humide d'une couche de diffusion gazeuse comportant un évidement 211.

Selon un tel procédé par voie humide, on applique une solution aqueuse 12 sur un support 31 poreux présentant une structure connue en soi. Ce support 31 est surmonté d'un relief rapporté 32 (parfois appelé galvano), définissant une forme pour l'évidement 211. La combinaison d'un support 31 et d'un relief rapporté 32 pour la formation d'une couche de diffusion gazeuse avec évidement est illustrée en vue de dessus à la figure 10. Un dispositif 34 de récupération d'eau en excès est disposé sous le support 31, et inclut par exemple un dispositif d'aspiration par dépression. Le support 31 est destiné à laisser filtrer l'eau incluse dans la solution aqueuse 12 pour conserver le reste des composants de la solution au-dessus de ce support 31.

La solution aqueuse inclut des fibres de carbone (connues en soi dans la formation de couches de diffusion gazeuse) et un matériau liant (par exemple de l'alcool de polyvinyle). La solution aqueuse 12 peut se présenter sous la forme d'une dispersion incluant les différents éléments.

Comme illustré dans l'exemple, la solution aqueuse 12 peut par exemple être appliquée par l'intermédiaire d'une buse de projection 33 mobile par rapport au support 31. En vue d'une telle application de la solution aqueuse 12, celle-ci pourra présenter une proportion massique en fibres de carbone inférieure ou égale à 0,02% (par exemple égale à 0,01 %) lors de la projection. Le matériau liant peut par exemple constituer 5 à 10% de la proportion massique de la couche de diffusion gazeuse formée.

Une fois la solution aqueuse 12 appliquée sur le support 31, on laisse la majeure partie de l'eau de celle-ci s'évacuer à travers le support 31, jusqu'à obtenir un élément suffisamment solide pour permettre sa manipulation. L'élément solidifié comporte l'évidement 211 défini par la forme du relief 32. L'élément solidifié peut ensuite subir d'autres traitements tels qu'un séchage au four, un pressage, une imprégnation ou une graphitisation, jusqu'à obtenir une couche de diffusion gazeuse 21 devant être assemblée à l'intérieur de la pile à combustible 1.

L'élément solidifié peut présenter une profondeur d'évidement supérieure à celle de la couche de diffusion gazeuse formée, en particulier lorsque l'élément solidifié subit une étape de pressage. L'épaisseur du relief 32 sera avantageusement définie pour prendre en compte ces étapes ultérieures du processus. La largeur du relief sera avantageusement comprise entre 500 et 3000µm, afin de définir la largeur de l'évidement 211 à former.

La figure 11 est une vue en coupe schématique agrandie d'une variante de pile à combustible 1 au niveau de l'assemblage membrane/électrodes. Des interfaces de contact présentant des ondulations sont créées entre les couches de diffusion gazeuse 21 et 22 et la cathode 111 et l'anode 112 respectivement.

À cet effet, la face de contact de la couche de diffusion gazeuse 21 avec la cathode 111 présente des ondulations. De façon similaire, la face de contact de la couche de diffusion gazeuse 22 avec l'anode 112 présente des ondulations. L'assemblage membrane/électrodes est ici souple et épouse (de préférence par déformation élastique) la forme des ondulations des couches de diffusion gazeuse 21 et 22.

Ainsi, pour une épaisseur à peine augmentée de la cellule électrochimique et pour une surface identique des plaques de guidage 101 et 102, la surface d'échange entre les couches de diffusion gazeuse 21, 22 et les électrodes 111, 112 est ainsi accrue. On peut ainsi disposer d'une pile à combustible 1 de puissance accrue pour un encombrement quasiment inchangé. En outre, cette puissance est augmentée pour un volume inchangé des couches de diffusion gazeuse. La densité de puissance rapportée à l'encombrement est donc accrue. Les couches de diffusion gazeuse pouvant représenter une partie prépondérante du coût de la cellule électrochimique, la puissance de la pile à combustible 1 est augmentée quasiment sans surcoût.

Dans l'exemple illustré, les ondulations sont périodiques, avec une période P. Les ondulations présentent ici une périodicité le long d'un axe x. La période des ondulations est avantageusement comprise entre 50 et 250 µm, et de préférence comprise entre 75 et 150 µm (par exemple 100 µm). La période est suffisamment réduite pour induire une augmentation de surface conséquente sans accroissement de l'épaisseur de l'assemblage membrane/électrodes. La période est suffisamment élevée pour éviter de déformer excessivement l'assemblage membrane/électrodes. Ainsi, on évite de détériorer la liaison entre les électrodes 111 et 112 et la membrane 100, et on limite les risques d'un décollement entre la face de contact d'une couche de diffusion gazeuse et une électrode.

Les ondulations présentent avantageusement une amplitude homogène A. Cette amplitude est avantageusement comprise entre 15 et 50µm, et de préférence comprise entre 20 et 45 µm. Cette amplitude est avantageusement comprise entre 5 et 20 % de l'épaisseur de la couche de diffusion gazeuse, et de préférence comprise entre 5 et 15%. L'amplitude des ondulations est ici définie comme la profondeur séparant une crête d'un fond d'une ondulation. L'amplitude des ondulations est suffisamment élevée pour induire une augmentation de surface d'échange conséquente entre la couche de diffusion gazeuse et l'électrode en contact. L'amplitude des ondulations est suffisamment réduite pour éviter de déformer excessivement l'assemblage membrane/électrodes. Le rapport entre l'amplitude et la période des ondulations est avantageusement comprise entre 2 et 5. Les couches de diffusion gazeuse 21 et 22 présentent avantageusement une épaisseur comprise entre 150 µm et 500 µm, et généralement comprise entre 200 et 300 µm.

Avec de tels paramètres, on peut envisager un gain de surface d'échange entre une électrode est une couche de diffusion gazeuse comprise entre 10 et 25%.

Le profil des ondulations est avantageusement arrondi. Le profil des ondulations est par exemple dépourvu d'arrêtes, afin d'éviter de détériorer l'assemblage membrane/électrodes ou de créer un risque de décollement entre la face de contact d'une couche de diffusion gazeuse et une électrode. On essaiera à cet égard de maximiser le rayon de courbure des ondulations. La face de contact présente avantageusement une forme d'extrusion ondulée. La direction d'extrusion est ici l'axe z, perpendiculaire à l'axe x. La direction d'extrusion correspond ici à la direction de répartition des canaux d'écoulement 103 et 104.

Pour rester aisément déformable sans détérioration structurelle ni altération de son fonctionnement, l'assemblage membrane/électrodes (hors couches de diffusion gazeuses) présentera avantageusement une épaisseur comprise entre 35 et 130 µm. Les électrodes 111 et 112 pourront présenter une épaisseur comprise entre 5 et 15 µm. La membrane 100 présentera avantageusement une épaisseur comprise entre 20 et 100 µm.

Les figures 13 et 14 illustrent un exemple d'étapes modifiées d'un procédé de fabrication pour obtenir des couches de diffusion gazeuse munies d'une face de contact présentant des ondulations. Les ondulations peuvent être obtenues en utilisant le procédé de formation de filigranes par voie humide décrit auparavant.

Le support 31 est surmonté comme précédemment d'un relief rapporté 32 définissant une forme pour l'évidement 211 Le support 31 est en outre surmonté d'un relief rapporté 35 définissant d'autres zones de moindre épaisseur dans la couche de diffusion gazeuse à fabriquer. La combinaison d'un support 31 et des reliefs rapportés 32 et 35 pour la formation d'une telle couche de diffusion gazeuse est illustrée en vue de dessus à la figure 14.

Un procédé de fabrication par voie humide permet en particulier d'obtenir une couche de diffusion gazeuse présentant une première face plane (à la rugosité près du matériau de la couche de diffusion gazeuse) et une deuxième face présentant des ondulations. La première face peut bien entendu être également non plane.

## Revendications

1. Procédé de fabrication d'une pile à combustible (1), comprenant les étapes de :
- solidarisation d'un renfort, comportant une ouverture dans sa partie médiane, à une membrane échangeuse de protons et à une électrode placée contre une face de la membrane, de sorte que la bordure interne du renfort solidarisé recouvre la périphérie de l'électrode avec un débordement sur la membrane échangeuse de protons ;
- formation d'un évidement à la périphérie d'une couche de diffusion gazeuse par un procédé de formation de filigrane par voie humide dans la couche de diffusion gazeuse ;
- placement de la couche de diffusion gazeuse, de sorte que l'évidement est disposé à l'aplomb de la bordure interne du renfort.

2. Procédé de fabrication d'une pile à combustible selon la revendication 1, dans lequel l'étape de formation de filigrane comprend l'application d'une couche d'une solution aqueuse incluant des fibres de carbone et un matériau liant, et comprend la solidification des composants de la solution aqueuse pour former ladite couche de diffusion gazeuse.

3. Procédé de fabrication d'une pile à combustible selon la revendication 2, dans lequel la couche de diffusion gazeuse formée comporte un évidement d'une profondeur de 25 à 75µm.

4. Procédé de fabrication d'une pile à combustible selon la revendication 2 ou 3, dans lequel la couche de diffusion gazeuse formée comporte un évidement d'une largeur comprise entre 500 et 3000µm.

5. Procédé de fabrication d'une pile à combustible selon l'une quelconque des revendications précédentes, dans lequel la couche de diffusion gazeuse placée présente une composition sensiblement homogène.

6. Procédé de fabrication d'une pile à combustible selon l'une quelconque des revendications précédentes, dans lequel la couche de diffusion gazeuse placée comporte une première face dans laquelle l'évidement est formé et une deuxième face, la partie de la deuxième face à l'aplomb de l'évidement étant dans l'alignement de la partie médiane de la deuxième face.

## Patentansprüche

1. Verfahren zur Herstellung einer Brennstoffzelle (1), das die folgenden Schritte enthält:
- festes Verbinden einer Verstärkung, die eine Öffnung in ihrem mittleren Bereich aufweist, mit einer Protonenaustauschmembran und mit einer Elektrode, die gegen eine Seite der Membran angebracht ist, derart, dass der Innenrand der fest verbundenen Verstärkung den Umfang der Elektrode mit einem Überstand auf die Protonenaustauschmembran bedeckt;
- Bilden einer Aussparung am Umfang einer Gasdiffusionsschicht durch ein Verfahren zur Bildung eines Wasserzeichens im Nassverfahren in der Gasdiffusionsschicht;
- Anbringen der Gasdiffusionsschicht derart, dass die Aussparung lotrecht zum Innenrand der Verstärkung angeordnet ist.

2. Verfahren zur Herstellung einer Brennstoffzelle nach Anspruch 1, wobei der Schritt des Bildens eines Wasserzeichens das Auftragen einer Schicht einer wässrigen Lösung enthält, die Kohlenstofffasern und ein Bindematerial umfasst, und die Verfestigung der Bestandteile der wässrigen Lösung enthält, um die Gasdiffusionsschicht zu bilden.

3. Verfahren zur Herstellung einer Brennstoffzelle nach Anspruch 2, wobei die gebildete Gasdiffusionsschicht eine Aussparung einer Tiefe von 25 bis 75 µm aufweist.

4. Verfahren zur Herstellung einer Brennstoffzelle nach Anspruch 2 oder 3, wobei die gebildete Gasdiffusionsschicht eine Aussparung einer Breite zwischen 500 und 3000 µm aufweist.

5. Verfahren zur Herstellung einer Brennstoffzelle nach einem der vorhergehenden Ansprüche, wobei die angebrachte Gasdiffusionsschicht eine im Wesentlichen homogene Zusammensetzung aufweist.

6. Verfahren zur Herstellung einer Brennstoffzelle nach einem der vorhergehenden Ansprüche, wobei die angebrachte Gasdiffusionsschicht eine erste Seite, in der die Aussparung ausgebildet ist, und eine zweite Seite aufweist, wobei der Teil der zweiten Seite lotrecht zur Aussparung sich in Flucht mit dem mittleren Teil der zweiten Seite befindet.

## Claims

1. Process for manufacturing a fuel cell stack (1), comprising steps of:
- securely fastening a reinforcement, comprising an aperture in its median portion, to a proton exchange membrane and to an electrode placed against one face of the membrane, so that the internal border of the securely fastened reinforcement covers the periphery of the electrode and extends over the proton exchange membrane;
- forming a recess on the periphery of a gas diffusion layer using a wet process for forming a watermark in the gas diffusion layer; and
- placing the gas diffusion layer so that the recess is arranged plumb with the internal border of the reinforcement.

2. Process for manufacturing a fuel cell stack according to Claim 1, in which the watermark-forming step comprises applying a layer of an aqueous solution including carbon fibres and a binder material, and comprises solidifying components of the aqueous solution in order to form said gas diffusion layer.

3. Process for manufacturing a fuel cell stack according to Claim 2, in which the formed gas diffusion layer comprises a recess of a depth of 25 to 75 µm.

4. Process for manufacturing a fuel cell stack according to either of Claims 2 and 3, in which the formed gas diffusion layer comprises a recess of a width comprised between 500 and 3000 µm.

5. Process for manufacturing a fuel cell stack according to any one of the preceding claims, in which the placed gas diffusion layer has a substantially homogenous composition.

6. Process for manufacturing a fuel cell stack according to any one of the preceding claims, in which the placed gas diffusion layer comprises a first face in which the recess is formed and a second face, the portion of the second face plumb with the recess being in alignment with the median portion of the second face.
